(19) Europäisches Patentamt
European Patent Office
Office européen des brevets

(11) **EP 4 275 865 B1**

(12) **EUROPÄISCHE PATENTSCHRIFT**

(45) Veröffentlichungstag und Bekanntmachung des Hinweises auf die Patenterteilung:
**31.12.2025 Patentblatt 2026/01**

(21) Anmeldenummer: **23168396.2**

(22) Anmeldetag: **18.04.2023**

(51) Internationale Patentklassifikation (IPC):
**B29C 48/92** (2019.01)    **B29C 48/285** (2019.01)

(52) Gemeinsame Patentklassifikation (CPC):
**B29C 48/92; B29C 48/286;** B29C 2948/92228;
B29C 2948/92314; B29C 2948/92447;
B29C 2948/926; B29C 2948/92828

(54) **VERFAHREN ZUM EXTRUDIEREN EINES EXTRUSIONSPRODUKTES UND EXTRUSIONSLINIE**

METHOD FOR EXTRUDING AN EXTRUSION PRODUCT AND EXTRUSION LINE

PROCÉDÉ D'EXTRUSION D'UN PRODUIT D'EXTRUSION ET LIGNE D'EXTRUSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **20.04.2022 US 202263332874 P**

(43) Veröffentlichungstag der Anmeldung:
**15.11.2023 Patentblatt 2023/46**

(73) Patentinhaber: **CiTEX Holding GmbH**
**49324 Melle (DE)**

(72) Erfinder:
• **Unruh, Andrej**
**Bird in Hand, PA 17505 (US)**
• **Petermann, Jan Hendrik**
**49328 Melle (DE)**

(74) Vertreter: **Bremer, Ulrich**
**Advopat**
**Patent- und Rechtsanwälte**
**Theaterstraße 6**
**30159 Hannover (DE)**

(56) Entgegenhaltungen:
WO-A1-2016/087564    DE-A1- 102020 116 810
DE-U1- 202018 006 144

**Beschreibung**

Die Erfindung betrifft ein Verfahren und eine Extrusionslinie zum Extrudieren eines Extrusionsproduktes.

In Extrusionslinien wird im Allgemeinen ein rieselfähiges Schüttgut, zum Beispiel als Granulat, Flocken, Pulver oder Pellets, aufgeschmolzen und als Extrusionsprodukt, zum Beispiel ein Profil oder auch eine Folie, ausgegeben. Hierbei werden den Ausgangsmaterialien oftmals Additive als weiteres Schüttgut zugegeben, so dass die mehreren Schüttgüter dann im Extruder gemeinsam aufgeschmolzen und extrudiert werden. Als Additiv kann insbesondere Ruß zugeführt werden, das zum Schutz gegenüber UV-Strahlung dient, weiterhin auch z.B. Kalziumkarbonat oder Bariumsulfat für z.B. PVC- oder Polypropylen (PP) -Kunststoffmaterialien, die z.B. als Schalldämmung in Rohren oder als günstiges Additiv, d.h. günstiger Füllstoff benutzt werden.

Die EP3156140A1 beschreibt eine Dosiereinrichtung für rieselfähiges Schüttgut, das nachfolgend einem Extruder zugeführt werden kann. Die DE 10 2015 110 600 B3 beschreibt eine Extrusionslinie, bei der eine Wanddicke durch THz-Strahlung bzw. Radar-Strahlung mittels Laufzeitmessung ermittelt wird. Die so ermittelte Schicht- Laufzeit der Radarstrahlung liefert im Allgemeinen zunächst nur das Produkt aus Schichtdicke und Brechungsindex.

Eine genaue Einstellung des Additivgehaltes ist im Allgemeinen wichtig. So kann zum Beispiel ein zu hoher Rußgehalt das Material des Extrusionsproduktes brüchig werden lassen. Hierzu wird der Rußgehalt im Allgemeinen durch einen Aschetest des Extrusionsproduktes ermittelt; derartige Test sind jedoch aufwändig und können bei der Zuführung der Komponenten erst mit deutlichem Zeitverzug berücksichtigt werden. Im Falle von Kalziumkarbonat und Bariumsulfat beeinflussen die Additive bzw. Füllstoffe die gewünschten Schall- und Mechanikeigenschaften des Endproduktes.

DE 10 2020 116 810 A1 beschreibt ein THz-Messverfahren und eine THz-Messvorrichtung zum Vermessen eines Messobjektes, insbesondere eines Rohres, das insbesondere auch direkt nach der Extrusion vermessen werden kann, wobei das THz-Messverfahren die Schritte des Bereitstellens einer THz-Sensoranordnung zum Aussenden und/oder Reflektieren von THz-Sendestrahlen von mindestens zwei Messpositionen eines Messbereichs aufweist, mit nachfolgendem Kalibrierungsschritt unter Messung einer Laufzeit durch eine Leerlaufstrecke ohne das Messobjekt, und nachfolgender Objekt-Messung mit positioniertem Messobjekt, wobei von einer ersten Messposition und einer zweiten Messposition jeweils THz-Messungen durch das Messobjekt durchgeführt werden und eine Gesamtlaufzeit durch den Messbereich mit dem Messobjekt ermittelt wird, wobei nachfolgend Wanddicken eines vorderen und hinteren Wandbereichs aus gemessenen Laufzeiten ermittelt werden. Hierbei kann eine Materialzuführung zu dem Extruder vorgesehen sein, dem einen Ausgangsstoff, z. B. als Granulat, Pulver oder Schredderware zugeführt wird, wobei die THz-Messvorrichtung das extrudierte Produkt als Messobjekt vermisst und zeitlich Änderungen in einer Materialzusetzung und/oder Materialverteilung des extrudierten Rohrprofils ermittelt, und ein Anzeigesignal und/oder Steuersignal zur Ansteuerung des Extruders und/oder seiner Materialzuführung ausgibt.

WO 2016/087564 A1 beschreibt ein Verfahren zum kontinuierlichen Zubereiten einer Polyolefin-Zusammensetzung, die Polyolefin und Ruß aufweist, wobei die Zusammensetzung in einen Extruder eingegeben wird.

DE 20 2018 006 144 U1 beschreibt eine Vorrichtung zum Vermessen eines aus einer Extrusionsvorrichtung austretenden rohrförmigen Stranges, bei dem eine Strahlungsquelle für elektromagnetische Strahlung im Frequenzbereich von 1 GHz bis 6000 GHz vorgesehen ist, wobei die von ihr ausgesandte elektromagnetische Strahlung von innen auf die Innenseite des rohrförmigen Stranges geleitet wird, wobei weiterhin mindestens ein Strahlungsempfänger vorgesehen ist zum Empfangen von durch den rohrförmigen Strang reflektierter elektromagnetischer Strahlung.

Der Erfindung liegt daher die Aufgabe zugrunde, ein Verfahren zur Extrusion und eine Extrusionslinie zu schaffen, die mit relativ geringem Aufwand eine sichere Bestimmung eines Additivgehaltes ermöglichen.

Diese Aufgabe wird durch ein Verfahren nach Anspruch 1 und eine Extrusionsline nach Anspruch 12 gelöst. Die Unteransprüche beschreiben bevorzugte Weiterbildungen. Das erfindungsgemäße Verfahren ist insbesondere mit der erfindungsgemäßen Extrusionslinie durchführbar.

Somit ist eine kontinuierliche Überwachung des Additivgehaltes durch eine stationäre Radar-Messeinrichtung, d.h. eine in der Extrusionslinie vorgesehene Inline-Radar-Messeinrichtung vorgesehen, die das geförderte Extrusionsprodukt fortlaufend vermisst und ein Laufzeit-Messsignal einer Schicht des Extrusionsproduktes ausgibt. Die so ermittelte Laufzeit hängt zunächst von der geometrischen Schichtdicke und dem Brechungsindex, d.h. somit der Lichtgeschwindigkeit im Material des Extrusionsproduktes, ab.

Somit können einige Vorteile erreicht werden. So ist eine inline- Messung des Additivgehaltes, d.h. während der Extrusion in der Extrusionslinie, möglich. Anders als bei herkömmlichen Bestimmungen wie dem Aschtest kann somit eine Regelung erfolgen, bei der die Additiv-Zuführrate entsprechend angepasst wird. Hierbei ist der zusätzliche Aufwand gering, da im Wesentlichen gespeicherte Referenz-Messwerte eingehen,

Die Abhängigkeit des Brechungsindex des Extrusionsproduktes vom Additivgehalt wird erfindungsgemäß vorzugsweise in vorab durchgeführten Referenzmessungen ermittelt bzw. kalibriert. Es zeigt sich insbesondere bei den hinreichend geringen Konzentrationswerten typischer Additive wie Ruß oder Kalziumkarbonat eine affine lineare Abhängigkeit, das heißt der Brechungsindex steigt von einem Anfangs-Brechungsindex des reinen Kunststoffmaterials nachfolgend bei Zuführung des Additivs entlang einer Geraden oder zumindest im Wesentlichen entlang einer Geraden an, wobei diese Abhängigkeit durch Kalibriermessungen beziehungsweise Referenzmessungen ermittelt und gespeichert werden kann.

Wenn somit das Additiv, vorteilhafterweise in reiner Form, zum Beispiel als Ruß-Pellets, dem Extruder zugeführt wird, kann grundsätzlich eine Regelung auf den Additivgehalt durchgeführt werden, indem der Additivgehalt kontinuierlich gemessen und die Dosiereinrichtung des Additiv-Schüttgutes hierdurch angesteuert wird.

Hierzu wird anfangs eine Messung sowohl der Schichtdicke als auch des Brechungsindex des Extrusionsproduktes durchgeführt. Hierzu werden vorteilhafterweise zwei Messungen durchgeführt, da eine Radar-Laufzeitmessung lediglich das Produkt aus dem Brechungsindex und Schichtdicke ermitteln kann. Für die zwei Messungen kann eine Radar-Messung, zum Beispiel durch die stationäre Messeinrichtung oder auch eine portable Radar-Messeinrichtung, und weiterhin eine mechanische Schichtdickenmessung erfolgen. Alternativ hierzu können Schichtdicke und Brechungsindex auch durch eine Kalibrier-Messung der Inline-Radar-Messeinrichtung bei leerem Messraum und nachfolgender Vermessung des durchgeführten Extrusionsproduktes erfolgen, da durch diese beiden Messungen ebenfalls die Ermittlung sowohl der Schichtdicke als auch des Brechungsindex möglich ist.

Aufgrund der gespeicherten Referenzdaten kann somit die Ansteuerung der Dosiereinrichtung für das Additiv entsprechend geändert werden. Die Regelung des Rußgehaltes ist erfindungsgemäß als Nahschleifensteuerung bzw. Nahschleifenregelung vorgesehen. Für die überlagerte Schichtdickenregelung wird nachfolgend der Abzug und/oder der Extruder und/oder die Zuführeinrichtung für das erste Schüttgut angesteuert.

Die Vermessung erfolgt hierbei nach der Kühlung des Extrusionsproduktes, da Radar- bzw. THz-Laufzeitmessungen abhängig von der Temperatur und insbesondere der Kristallinität des Extrusionsproduktes sind, wobei sich der Brechungsindex, aber auch die Dichte des Materials und ggf. die Form der Schicht beim Abkühlen ändern können.

Die Zufuhreinrichtung für das erste Schüttgut ist vorteilhafterweise eine gravimetrische Zufuhreinrichtung, das heißt eine gravimetrische Waage, die im Durchlaufverfahren das zugegebene Schüttgut vermisst, wobei sie weiterhin die Einstellung der Zuführrate ermöglicht. Die Dosiereinrichtung für das Additiv-Schüttgut ist vorteilhafterweise ebenfalls eine gravimetrische Dosiereinrichtung, die eine kontinuierliche Messung des zugeführten Additivs, und weiterhin eine Dosierung beziehungsweise Änderungsrate der Zuführrate ermöglicht.

Als Extrusionsprodukt kann insbesondere ein Strang, zum Beispiel ein Rohr beziehungsweise zylindrisches Rohr oder auch ein Rechteck-Rohr, weiterhin aber auch eine Scheibe oder Folie vermessen werden.

Die eingesetzte Radar-Strahlung bzw. THz-Strahlung liegt vorzugsweise im Frequenzbereich von 10 GHz bis 50 THz, insbesondere von 30 oder 50 GHz bis 10 THz oder 30 THz,

vorzugsweise als Frequenzmodulation, insbesondere frequenzmodulierte kontinuierliche Radarstrahlung (FMCR), und/oder als direkte Laufzeitmessung und/oder als gepulste Strahlung. Die Radarstrahlung kann somit auch im Mikrowellenbereich liegen.

In dem Extrusionsschritt des Aufschmelzens wird aus den zugeführten Schüttgütern eine Schmelze erzeugt. Hierbei wird zumindest das erste Schüttgut aufgeschmolzen, wobei das Additiv-Schüttgut, z.B. Ruß oder ein Salz wie Bariumsulfat oder Kalziumkarbonat, gegebenenfalls nicht direkt aufgeschmolzen ist, sondern in der Schmelze aufgenommen ist.

Die Erfindung wird im Folgenden anhand der beiliegenden Zeichnungen an einigen Ausführungsformen näher erläutert. Es zeigen:

Fig. 1    eine Vorrichtung zur Ermittlung eines Additivgehalts gemäß einer Ausführungsform der Erfindung;
Fig. 2    eine Darstellung der Radar-Vermessung eines Rohres;
Fig. 3    ein Flussdiagramm eines erfindungsgemäßen Verfahrens,
Fig. 4    eine Messkurve gespeicherter Werte des Brechungsindex eines Polyethylen-Kunststoffs in Abhängigkeit des Rußgehaltes.

Eine Extrusionslinie 1 weist einen Extruder 2 auf, dem in einem ersten Schritt St1 über eine gravimetrische Zuführeinrichtung 4 ein erstes Schüttgut, hier ein Kunststoff-Schüttgut 5 wie z. B. Polyethylen-Pellets oder Polyethylen-Granulat, zugeführt wird, so dass die gravimetrische Zuführeinrichtung 4 fortlaufend das Schüttgut 5 in den Extruder 2 fördert und den Massedurchsatz als erste Förderrate fr5, d.h. als Masse pro Zeit, z.B. kg/s, an eine Steuereinrichtung 10 ausgibt. Weiterhin ist eine gravimetrische Dosiereinrichtung 6 vorgesehen, die als Additiv-Schüttgut Pellets oder Pulver 8 aufnimmt, den Massedurchsatz als Additiv-Zuführrate fr8 misst und an die Steuereinrichtung 10 ausgibt.

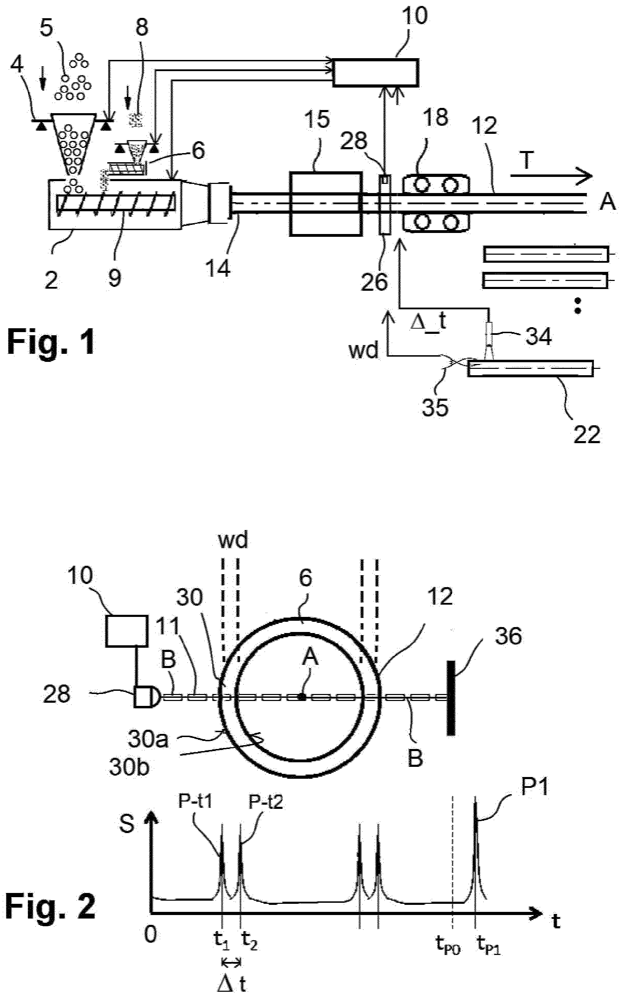

Anders als in Figur 1 schematisch gezeigt, können das Schüttgut 5 und die Additiv-Pellets oder -pulver 8 über einen gemeinsamen Trichter in den Extruder 2 eingegeben werden. Sie werden von dem Extruder 2 über die Extruderschnecke 9 gemischt und gemäß Schritt St2 gefördert, wobei Sie in üblicher Weise von dem Extruder 2 aufgeschmolzen und nachfolgend fortlaufend als Rohr 12 in Produktionsrichtung T entlang einer Extrusionsachse A ausgegeben werden.

Das extrudierte Rohr 12 ist somit aus einem gemischtem Kunststoffmaterial 14 ausgebildet, das zunächst noch schmelzflüssig ist und nachfolgend in Schritt St3 in einer Kühleinrichtung 15 gekühlt wird. Das Rohr 12 wird hierzu von einem Abzug 18 durch die Kühleinrichtung 15 und nachfolgend zu einer Abläng-Einrichtung 20 gefördert, in der Rohrstücke 22 abgelängt bzw. abgetrennt werden.

Das Rohr 12 wird nach der Abkühlung in Schritt St4 sowohl auf seine Schichtdicke, d.h. hier die Wanddicke wd seiner Wand 30, als auch den Brechungsindex n14 vermessen, wozu zwei Messungen durchgeführt werden, von denen zumindest eine Messung eine Radar- bzw. THz-Messung ist.

Hierzu wird gemäß einer ersten Ausführungsform mittels einer stationären (Inline)-THz-Messvorrichtung 26 oder mittels eines tragbaren THz-Sensors 34 eine Laufzeit Delta_t ermittelt, indem gemäß Fig. 2 THz-Strahlung 11 ausgegeben wird und durch die Wand 30 des Rohres 2 tritt, wobei Reflexionspeaks P-t1 an einer vorderen Grenzfläche 30a und P-t2 hinteren Grenzfläche 30b gemessen werden. Diese Laufzeit-Messung ergibt somit eine Laufzeit Delta_t, die sich aus der Wanddicke wd und der Lichtgeschwindigkeit C14 des abgekühltem Kunststoffmaterials 14 ergibt, mit C0 als Lichtgeschwindigkeit im Vakuum oder Luft als

$$C0/C14 = n14, \quad \text{und}$$

$$2 * wd = C14 * Delta\_t = C0/n14 \ * \ Delta\_t,$$

$$\text{d.h.} \quad 2 * wd * n14 = \ C0 * Delta\_t \qquad (GL1)$$

Da Delta_t gemessen wird, ist zunächst nur das Produkt wd*n14 bekannt. Durch eine zweite Messung wird die Ermittlung beider Werte möglich.

Gemäß einer Ausführungsform kann hierzu eine Kalibrier-Messung des leeren Messraums 32 vor der Extrusion erfolgen, bei der gemäß Figur 2 die THz-Messvorrichtung 26 über einen THZ-Sensor 28 die THZ-Strahlung 11 durch den leeren Messraum 32 ausgibt und die Laufzeit von einer Reflexionseinrichtung 36 und zurück ermittelt, oder statt der Reflexionseinrichtung 36 die durch den Messraum 32 gelangte Strahlung direkt gemessen wird, wobei die Einstellung der THz-Messvorrichtung 26 zwischen der Kalibriermessung und nachfolgenden Messung mit dem Rohr 12 nicht verändert wird. Die so ermittelte Kalibrier-Laufzeit beziehungsweise Leerraum-Laufzeit kann nachfolgend mit der in Figur 2 gezeigten Laufzeit bei aufgenommenem Rohr 12 verglichen werden, wobei insbesondere die Differenz der Zeitpunkte tP1 und tP0 als Verzögerung des Totalreflexionspeaks an der Reflexionseinrichtung 36 als Gesamt-Verzögerung eingeht. Somit kann aus den beiden Messungen sowohl die Wanddicke wd als auch der Brechungsindex n14 ermittelt werden können.

Alternativ hierzu erfolgt als erste Messung wiederum eine Radar-Messung bzw. THz-Messung durch das Rohr 12, die somit die Laufzeit Delta_t durch die Wand 30 liefert. Weiterhin erfolgt als zweite Messung eine direkte mechanische Messung der Schichtdicke wd durch ein mechanisches Messgerät 35, die z.B. an einem abgelängten Rohrstück 22 erfolgen kann, so dass aus dem oben ausgeführten Gleichungssystem **GL1** wiederum wd und n14 ermittelt werden können. Die Radar-Messung kann bei dieser Ausführungsform über die stationäre Radar-Messeinrichtung 26 oder eine portable Radar-Messeinrichtung 34 mit vorzugsweise demselben Radar-Mess-Chip, insbesondere einem FMCW-Sensor, erfolgen, der auch in der stationären Radar-Messeinrichtung 26 eingesetzt wird.

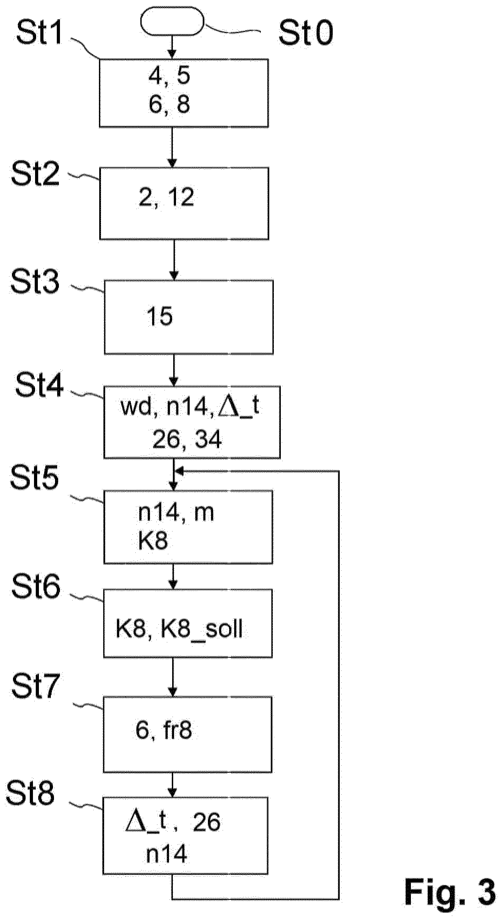

Somit werden bei dem erfindungsgemäßen Verfahren gemäß Fig. 3 in Schritt St4 die Wanddicke wd und der Brechungsindex n14 ermittelt.

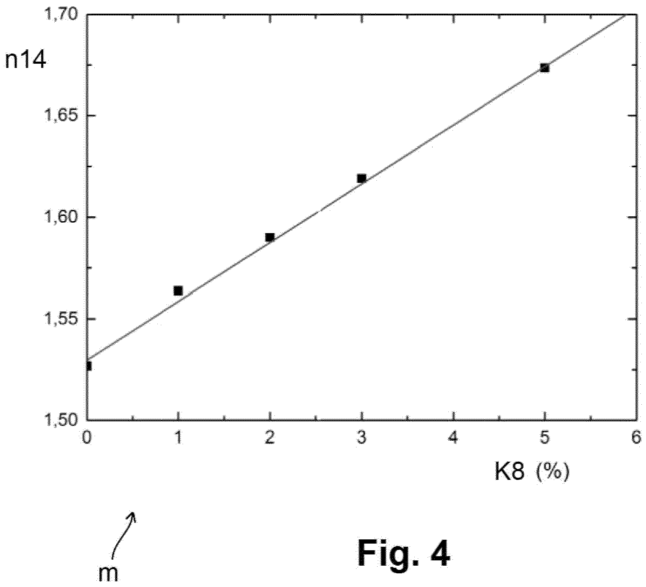

Gemäß Schritt St5 wird nachfolgend aus dem in Schritt St4 ermittelten Brechungsindex n14 der Additivgehalt K8 ermittelt. Hierzu werden gemäß Fig. 4 gespeicherte Messwerte m herangezogen, die vorzugsweise aus vorherigen Messungen bei gleicher Radar-Strahlung ermittelt worden sind. Fig. 4 zeigt eine Messkurve der Abhängigkeit des Brechungsindex n14 eines mit Ruß versetzten Polyethylen-Kunststoffs in Abhängigkeit von dem Additivgehalt K8. Hier sind einige Messpunkte eingezeichnet, aus denen nachfolgend interpoliert bzw. extrapoliert werden kann. Hier zeigt sich insbesondere eine affine lineare Abhängigkeit.

Somit ist der Anfangs- Additivgehalt K8 bekannt, der somit in Schritt St6 mit einem Soll-Additivgehalt K8_soll verglichen wird,

woraufhin dann in Schritt St7 eine Änderung bzw. Regelung des Additivgehaltes K8 durch automatisierte oder manuelle Ansteuerung der Dosiereinrichtung 6 und Änderung der Additiv-Zuführrate K8 erfolgt.

Dann erfolgt in Schritt St8 nachfolgend während der Extrusion fortlaufend oder wiederholt eine Messung der aktuellen Schichtlaufzeit Delta_t mit der stationären Radar- Messeinrichtung 26 oder der portablen Radar- Messeinrichtung 34. Somit entspricht Schritt St8 im Wesentlichen der Vermessung in Schritt St4, wobei allerdings in Schritt St4 und St8 auch unterschiedliche Radar-Messeinrichtungen 26, 34 eingesetzt werden können. So kann z.B. die erste Vermessung in Schritt St4 durch die portable Radar-Messeinrichtung 34 und die nachfolgenden Messungen in Schritt St8 durch die stationäre Radar-Messeinrichtung 26 erfolgen, oder gegebenenfalls auch umgekehrt.

Somit erfolgt in Schritt St5 bis St8 eine schnelle und genaue Regelung des Additivgehaltes K8.

Falls somit zum Beispiel ein Soll-Additivgehalt K8-Soll von 1,5 Prozent Additiv erreicht werden soll und ein aktueller Rußgehalt K8 von 2,5 Prozent gemessen wird, wird die Dosiereinrichtung 6 derartig angesteuert, dass der bei ihr eingestellte Massedurchsatz zum Beispiel proportional diesen Werten herabgesetzt wird. Vorzugsweise wird bei der Messung und Regelung der Additiv-Zuführung die zeitliche Verzögerung durch die Laufzeit des Materials von der Dosiereinrichtung 4 und dem Extruder 2 bis zu dem Messpunkt der stationären Radar- Messeinrichtung 26 berücksichtigt.

Ein weiterer äußerer Regelkreis dient dann vorzugsweise der Einstellung der Wanddicke wd, wobei die Steuerungseinrichtung 10 hier den Extruder 2 und den Abzug 18 ansteuert. Hierzu können z.B. in größeren Abständen die Wanddicken wd an abgelängten Rohrstücken 22 mechanisch vermessen werden.

**Bezugszeichenliste**

| | |
|---|---|
| 1 | Extrusionslinie |
| 2 | Rohr |
| 4 | Zuführeinrichtung für das erste Schüttgut 5 |
| 5 | erstes Schüttgut |
| 6 | Dosiereinrichtung für das Additiv-Schüttgut 8 |
| 8 | Additiv-Schüttgut |
| 10 | Steuereinrichtung |
| 11 | Radar-Strahlung, insbesondere FMCW-Radarstrahlung |
| 12 | Profil, insbesondere Rohr |
| 14 | extrudiertes Kunststoffmaterial, z.B. Rohrmaterial |
| 15 | Kühleinrichtung |
| 18 | Abzug |
| 20 | Abläng-Einrichtung |
| 22 | Rohrstücke |
| 26 | stationäre inline- Radar-Messvorrichtung |
| 28 | Radar-Sensor, insbesondere FCMW-Sensor |
| 30 | Schicht, insbesondere Wand |
| 30a, b | Grenzflächen der Schicht 30 |
| 30 | Schicht |
| 32 | Messraum |
| 34 | portabler Radar-Sensor |
| 35 | mechanisches Messgerät |
| 36 | Reflexionseinrichtung für Kalibriermessung |

| | |
|---|---|
| A | Extrusionsachse |
| C14 | Lichtgeschwindigkeit im Kunststoffmaterial 1a4 |
| dt | Laufzeit |
| fr5 | Zuführrate des ersten Schüttguts 5 |
| fr8 | Additiv-Zuführrate des Additiv-Schüttguts 8 |
| m | gespeicherte Referenz-Messwerte |
| n14 | Brechungsindex |
| T | Produktionsrichtung |
| wd | Wanddicke |

| | |
|---|---|
| K8 | Additivgehalt |
| K8-soll | Soll-Additivgehalt |

| | |
|---|---|
| St1: | Schritt Anfangs-Einstellung der Zuführraten |
| St2: | Extrusionsschritt |
| St3 | Kühlen des Extrusionsproduktes 12 |
| St4 | Anfangsvermessung des Extrusionsproduktes 12 |
| St5 | Ermitteln eines Additivgehaltes (K8) des Extrusionsproduktes 12 |
| St6 | Schritt Vergleich des ermittelten Additivgehaltes (K8) mit einem Soll-Additivgehalt (K8-Soll) |
| St7 | Regelung des Additivgehaltes (K8) durch Änderung der Additiv-Zuführrate |
| St8 | Messung der aktuellen Schichtlaufzeit (Delta_t) mit z.B. der stationären Radar- Messeinrichtung 26 |
| St5-St8 | Regelung durch Ermittlung eines aktuellen Additivgehaltes (K8) aus der aktuellen Schichtlaufzeit (Delta_t), insbesondere mit der Referenzmessung, und Änderung des Additivgehaltes (K8) |

**Patentansprüche**

1. Verfahren zum Extrudieren eines Extrusionsproduktes (12), mit mindestens folgenden Schritten:

   - Zuführen eines ersten Schüttguts (5) über eine Zuführeinrichtung (4) mit einer ersten Zuführrate (fr5) zu einem Extruder (2), und

   Zuführen eines Additiv-Schüttguts (8) über eine Dosiereinrichtung (6) mit einer Additiv-Zuführrate (fr8) zu dem Extruder (2)
   (Schritt St1: Anfangs-Einstellung der Zuführraten),

   - Aufschmelzen zumindest des ersten Schüttguts (5) und Extrudieren eines Extrusionsproduktes (12) (St2: Extrusionsschritt),
   - Kühlen des Extrusionsproduktes (12) (St3),
   - Vermessung des Extrusionsproduktes (12) unter Ermittlung einer Schichtdicke (wd) und eines Brechungsindex (n14), wobei mit einer Radar- Messeinrichtung (26, 34) eine Schichtlaufzeit (Delta_t) des Extrusionsproduktes gemessen wird (St4: Vermessung des Extrusionsproduktes),
   - Ermittelung eines Additivgehaltes (K8) des Extrusionsproduktes (12) aus dem Brechungsindex (n14) und Kalibrier-Werten (m) (St5),
   - Vergleich des ermittelten Additivgehaltes (K8) mit einem Soll-Additivgehalt (K8-Soll) (St6) und Regelung des Additivgehaltes (K8) durch Ansteuerung der Dosiereinrichtung (6) und Änderung der Additiv-Zuführrate (fr8) (St7),
   - nachfolgend während der Extrusion fortlaufende oder wiederholte Messungen der aktuellen Schichtlaufzeit (Delta_t) mit der Radar- Messeinrichtung (26) oder einer weiteren Radar-Messeinrichtung (34) und Bestimmung des aktuellen Brechungsindex (n14) (St8), und
   - nachfolgende Einstellung oder Regelung des Additivgehaltes (K8) (St5-St8) durch Rückführung zu der Ermittelung des Additivgehaltes (K8) des Extrusionsproduktes (12) (St5),

   **dadurch gekennzeichnet, dass**
   die Regelung des Additivgehaltes (K8) als Nahschleifen-Regelung durchgeführt wird und eine Regelung der Schichtdicke (wd) als übergeordnete Regelung überlagert ist.

2. Verfahren nach Anspruch 1, **dadurch gekennzeichnet, dass** als erstes Schüttgut ein Kunststoffmaterial, z.B. Polyethylen, Polypropylen oder PVC, oder Gummimaterial, z.B. als Pellets, Granulat, Pulver oder Flocken, und als Additiv-Schüttgut Ruß, Bariumsulfat oder Kalziumkarbonat, insbesondere als Granulat, Pulver oder Pellets, zugeführt wird.

3. Verfahren nach einem der vorherigen Ansprüche, **dadurch gekennzeichnet, dass** bei der Anfangs-Vermessung des Extrusionsproduktes (12) (St4) die Schichtdicke (wd) und der Anfangs-Brechungsindex (n14) mit zwei Messungen ermittelt werden:

   - eine Radar- Laufzeitmessung als Kalibriermessung einer stationären Radar-Messeinrichtung (26) vor der Extrusion bei leerem Messraum (32), und eine nachfolgende Radar- Laufzeitmessung des Extrusionsproduktes (12) bei unveränderter stationärer Radar-Messeinrichtung (26) und/oder
   - eine Radar- Laufzeitmessung, insbesondere mittels der stationären oder portablen Radar-Messeinrichtung (26, 34), und eine mechanische Messung der Schichtdicke des Extrusionsproduktes (12).

4. Verfahren nach einem der vorherigen Ansprüche, **dadurch gekennzeichnet, dass** die Radarmessung mittels einer stationären Radar-Messeinrichtung (26) und/oder portablen Radar-Messeinrichtung (34) erfolgt, und Radar-Strahlung oder THz-Strahlung im folgenden Frequenzbereich eingesetzt wird:

   10 GHz bis 50 THz, insbesondere von 30 oder 50 GHz bis 10 oder 30 THz,
   vorzugsweise als Frequenzmodulation, insbesondere frequenzmodulierte kontinuierliche Radarstrahlung (FMCR), und/oder als direkte Laufzeitmessung und/oder als gepulste Strahlung.

5. Verfahren nach einem der vorherigen Ansprüche, **dadurch gekennzeichnet, dass** als Extrusionsprodukt ein Profil (12), insbesondere ein Rohr (12) oder Rechteck-Profil, extrudiert und nachfolgend abgelängt wird, wobei als Schichtdicke eine Wanddicke (wd) eines Wandbereichs (30) des Profils (12) ermittelt wird.

6. Verfahren nach einem der vorherigen Ansprüche, **dadurch gekennzeichnet, dass** die Referenz-Messwerte (m) Messungen des Brechungsindex (n14) in Abhängigkeit der Additivgehalte (K8) aufweisen, und ein aktueller Additivgehalt (K8) aus den Referenz-Messwerten (m) ermittelt wird, z.B. als Interpolation, insbesondere als affine lineare Abhängigkeit des Brechungsindex (n14) vom Additivgehalt (K8).

7. Verfahren nach einem der vorherigen Ansprüche, **dadurch gekennzeichnet, dass** die Zuführeinrichtung (4) für das erste Schüttgut (5) und/oder die Dosiereinrichtung für das Additiv (8) eine Gravimetrie-Messeinrichtung zur Messung eines Massedurchsatzes pro Zeit ist.

8. Verfahren nach einem der vorherigen Ansprüche, **dadurch gekennzeichnet, dass** eine automatisierte oder manuelle Ansteuerung der Dosiereinrichtung (6) vorgesehen ist. (St7).

9. Verfahren nach einem der vorherigen Ansprüche, **dadurch gekennzeichnet, dass** bei der Messung und Regelung der Additiv-Zuführung (K8) eine zeitliche Verzögerung durch die Laufzeit des Materials von der Dosiereinrichtung (4) für das Additiv-Schüttgut (8) bis zu dem Messpunkt der stationären Radar- Messeinrichtung (26) berücksichtigt wird.

10. Verfahren nach einem der vorherigen Ansprüche, **dadurch gekennzeichnet, dass**

    bei in der übergeordneten Regelung der Schichtdicke (wd) eine Einstellung eines Abzugs (18) und/oder des Extruders (2) und/oder der Zuführvorrichtung (4) für das erste Schüttgut (5) erfolgt, und
    in der Nahschleifenregelung diese Werte unverändert bleiben und lediglich die Dosiereinrichtung (4) für das Additiv-Schüttgut (8) angesteuert wird.

11. Verfahren nach Anspruch10, **dadurch gekennzeichnet, dass** in der überlagerten Regelung der Schichtdicke (wd) eine mechanische Messung der Schichtdicken (wd) erfolgt in zeitlichen Abständen, die größer als zeitliche Abstände der aktuellen Messungen der Schichtlaufzeit (Delta_t) mit der stationären Radar- Messeinrichtung (26) sind.

12. Extrusionslinie (1) zum Extrudieren eines Extrusionsproduktes (12), wobei die Extrusionslinie (1) aufweist:

    - einen Extruder (2), der ausgebildet ist, kontinuierlich Schüttgut (5, 8) aufzunehmen und ein Extrusionsprodukt (12) zu extrudieren,
    - eine Steuereinrichtung (10) zur Ansteuerung des Extruders (2),
    - eine Zuführeinrichtung (4), die ausgebildet ist, ein erstes Schüttgut (5) aufzunehmen und an den Extruder (2) weiterzugeben, sowie eine erste Zuführrate (fR5) an eine Steuereinrichtung (10) auszugeben,
    - eine Dosiereinrichtung (6), die ausgebildet ist, ein Additiv-Schüttgut (8) aufzunehmen und an den Extruder (2) weiterzugeben und ein Additiv-Messsignal an die Steuereinrichtung (10) auszugeben,
    - eine dem Extruder (2) nachgeordnete Kühleinrichtung (15) zum Kühlen des Extrusionsproduktes (12), und
    - eine der Kühleinrichtung (15) nachgeordnete stationäre Radar-Messeinrichtung (26), die ausgebildet ist, kontinuierlich eine Schicht-Laufzeit (Delta_t) durch eine Schicht (30) des Extrusionsproduktes (12) zu messen,
    wobei die Steuereinrichtung (10) ausgebildet ist,
    in einer Anfangsvermessung des Extrusionsproduktes (12) die Schichtdicke (wd) und den Brechungsindex (n14) des Extrusionsproduktes (12) zu ermitteln (St4) und aus dem Brechungsindex (n14) und gespeicherten Kalibrier-Werten (m) einen Additivgehalt (K8) des Extrusionsproduktes (12) zu berechnen (St5) und zu regeln,
    wobei die Steuereinrichtung (10) weiterhin ausgebildet ist, während der Extrusion fortlaufend oder wiederholt Messungen der stationären Radar-Messeinrichtung (26) anzusteuern und Messwerte der aktuellen Schichtlaufzeit (Delta_t) aufzunehmen, aus einer Änderung der gemessenen aktuellen Schichtlaufzeit (Delta_t) auf eine Änderung des Additivgehaltes (K8) zu schließen und den Additivgehalt (K8) durch Ansteuerung der Dosiereinrichtung (6) und Änderung der Additiv-Zuführrate (St7) zu regeln,
    **dadurch gekennzeichnet, dass**
    die Steuereinrichtung (10) weiterhin ausgebildet, die Regelung des Additivgehaltes (K8) als Nahschleifenregelung durchzuführen und eine überlagerte Regelung der Schichtdicke (wd) durchzuführen durch Ansteuerung eines oder mehrerer der folgenden Einrichtungen:

        - eines der Kühleinrichtung (15) nachgeordneten Abzugs (18)
        - der Zuführeinrichtung (4) für das erste Schüttgut (5)
        - des Extruders (2).

13. Extrusionsline (1) nach Anspruch 12, **dadurch gekennzeichnet, dass** die Zuführeinrichtung (4) für das erste Schüttgut (5) und/oder die Dosiereinrichtung für das Additiv (8)
eine Gravimetrie-Messeinrichtung zur Messung eines Massedurchsatzes pro Zeit ist.

**14.** Extrusionslinie (1) nach Anspruch 12 oder 13, **dadurch gekennzeichnet, dass** die Steuereinrichtung (10) ausgebildet ist, ein Verfahren nach einem der Ansprüche 1 bis 11 durchzuführen.


**Claims**

**1.** Method for extruding an extrusion product (12), comprising at least the following steps:

- feeding a first bulk material (5) via a feeding device (4) at a first feeding rate (fr5) to an extruder (2), and feeding an additive bulk material (8) via a dosing device (6) at an additive feed rate (fr8) to the extruder (2) (step St1: initial setting of the feed rates),
- melting at least the first bulk material (5) and extruding an extrusion product (12) (St2: extrusion step),
- cooling the extrusion product (12) (St3),
- measuring the extrusion product (12) while determining a layer thickness (wd) and a refractive index (n14), wherein a layer time of flight (Delta_t) of the extrusion product is measured using a radar measuring device (26, 34) (St4: measuring the extrusion product),
- determining an additive content (K8) of the extrusion product (12) from the refractive index (n14) and calibration values (m) (St5),
- comparing the determined additive content (K8) to a target additive content (K8-soll) (St6) and controlling the additive content (K8) by controlling the dosing device (6) and changing the additive feed rate (fr8) (St7),
- subsequently, during extrusion, continuous or repeated measurements of the current layer time of flight (Delta_t) using the radar measuring device (26) or a further radar measuring device (34) and determination of the current refractive index (n14) (St8), and
- subsequent adjustment or controlling of the additive content (K8) (St5-St8) by feedback to the determination of the additive content (K8) of the extrusion product (12) (St5),

**characterized in that**
the controlling of the additive content (K8) is carried out as a closeloop control and a controlling of the layer thickness (wd) is superimposed as a superordinate controlling.

**2.** Method according to claim 1, **characterized in that** as the first bulk material a plastic material, e.g., polyethylene, polypropylene or PVC, or rubber material, is supplied in the form of e.g. pellets, granules, powder or flakes, and as the additive bulk material carbon black, barium sulphate or calcium carbonate, is supplied. in particular, as granules, powder or pellets.

**3.** Method according to one of the above claims, **characterized in that** during the initial measurement of the extrusion product (12) (St4) the layer thickness (wd) and the initial refractive index (n14) are determined in two measurements:

- a radar time-of-flight measurement as calibration measurement of a stationary radar measuring device (26) before extrusion with empty measuring space (32), and a subsequent radar time-of-flight measurement of the extrusion product (12) with unchanged stationary radar measuring device (26) and/or
- a radar time of flight measurement, in particular, by means of the stationary or portable radar measuring device (26, 34), and a mechanical measurement of the layer thickness of the extrusion product (12).

**4.** Method according to one of the above claims, **characterized in that** the radar measurement is carried out by means of a stationary radar measuring device (26) and/or a portable radar measuring device (34),
and radar radiation or THz radiation in the following frequency range is used:
10 GHz to 50 THz, in particular, from 30 or 50 GHz to 10 or 30 THz, preferably as frequency modulation, in particular frequency modulated continuous radar radiation (FMCR), and/or as direct time of flight measurement and/or as pulsed radiation.

**5.** Method according to one of the above claims, **characterized in that** a profile (12), in particular a tube (12) or rectangular profile, is extruded as said extrusion product and subsequently cut to length, wherein a wall thickness (wd) of a wall region (30) of the profile (12) is determined as the layer thickness.

6. Method according to one of the above claims, **characterized in that** the reference measured values (m) include measurements of the refractive index (n14) as a function of the additive contents (K8), and a current additive content (K8) is determined from the reference measured values (m), e.g., by way of interpolation, in particular as an affine linear dependence of the refractive index (n14) on the additive content (K8).

7. Method according to one of the preceding claims, **characterized in that** the feeding device (4) for the first bulk material (5) and/or the dosing device for the additive (8) is a gravimetric measuring device for measuring a mass throughput per time.

8. Method according to one of the above claims, **characterized in that** an automated or manual control of the dosing device (6) is provided. (St7).

9. Method according to one of the above claims, **characterized in that** the measurement and control of the additive feed (K8) takes into account a time delay caused by the transit time of the material from the dosing device (4) for the additive bulk material (8) up to the measuring point of the stationary radar measuring device (26).

10. Method according to one of the above claims, **characterized in that** in the superordinate controlling of the layer thickness (wd), an adjustment of a haul-off (18) and/or of the extruder (2) and/or of the feed device (4) for the first bulk material (5) is carried out, and in the close loop control these values remain unchanged and only the dosing device (4) for the additive bulk material (8) is controlled.

11. Method according to one of the above claims, **characterized in that** in the superordinate controlling of the layer thickness (wd), a mechanical measurement of the layer thicknesses (wd) is carried out at time intervals which are greater than time intervals of the current measurements of the layer time of flight (Delta_t) using the stationary radar measuring device (26).

12. Extrusion line (1) for extruding an extrusion product (12), said extrusion line (1) comprising

- an extruder (2), designed to continuously receive bulk material (5, 8) and to extrude an extrusion product (12),
- a control device (10) for controlling the extruder (2),
- a feeding device (4), designed to receive a first bulk material (5) and to pass it on to the extruder (2), and to output a first feed rate (fR5) to a control device (10),
- a dosing device (6), designed to receive an additive bulk material (8) and to pass it on to the extruder (2), and to output an additive measurement signal to the control device (10),
- a cooling device (15) arranged downstream of the extruder (2) for cooling the extruded product (12), and
- a stationary radar measuring device (26) arranged downstream of the cooling device (15), designed to continuously measure a layer time of flight (Delta_t) through a layer (30) of the extrusion product (12),
wherein the control device (10) is designed to
determine the layer thickness (wd) and the refractive index (n14) of the extrusion product (12) in an initial measurement of the extrusion product (12) (St4) and to calculate (St5) and control an additive content (K8) of the extrusion product (12) from the refractive index (n14) and stored calibration values (m),
wherein the control device (10) is further designed to continuously or repeatedly control measurements of the stationary Radar measuring device (26) during the extrusion and to record measured values of the current layer time of flight (Delta_t), in order to determine from a change in the measured current layer time of flight (Delta_t) a change in the additive content (K8) and to control the additive content (K8) by controlling the dosing device (6) and changing the additive feed rate (St7),
**characterized in that**
the control device (10) is further designed to carry out the control of the additive content (K8) as a close loop control and to carry out a superordinate controlling of the layer thickness (wd) by controlling one or more of the following devices:

- a haul-off (18) arranged downstream of the cooling device (15)
- the feeding device (4) for the first bulk material (5)
- the extruder (2).

13. Extrusion line (1) according to claim 12, **characterized in that** the feeding device (4) for the first bulk material (5) and/or the dosing device for the additive (8) is a gravimetric measuring device for measuring a mass throughput per time.

14. Extrusion line (1) according to claim 12 or 13, **characterized in that** the control device (10) is designed to carry out a process according to one of claims 1 through 11.

**Revendications**

1. Procédé d'extrusion d'un produit d'extrusion (12), comprenant au moins les étapes suivantes :

- alimentation d'une extrudeuse (2) avec un premier matériau en vrac (5) par l'intermédiaire d'un dispositif d'alimentation (4) à un premier débit d'alimentation (fr5), et alimentation de l'extrudeuse (2) avec un matériau additif (8) en vrac par l'intermédiaire d'un dispositif de dosage (6) à un débit d'alimentation (fr8) d'additif (étape St1 : réglage initial des débits d'alimentation),
- fusion d'au moins le premier matériau en vrac (5) et extrusion d'un produit d'extrusion (12) (étape St2 : étape d'extrusion),
- refroidissement du produit d'extrusion (12) (étape St3),
- mesure du produit d'extrusion (12) avec détermination d'une épaisseur de couche (wd) et d'un indice de réfraction (n14), un dispositif (26, 34) de mesure radar mesurant un temps de transit de couche (Delta_t) du produit d'extrusion (étape St4 : mesure du produit d'extrusion),
- détermination d'une teneur en additif (K8) du produit d'extrusion (12) à partir de l'indice de réfraction (n14) et de valeurs d'étalonnage (m) (étape St5),
- comparaison de la teneur en additif (K8) déterminée avec une teneur en additif nominale (K8-nominale) (étape St6) et ajustement de la teneur en additif (K8) par commande du dispositif de dosage (6) et modification du débit d'alimentation (fr8) d'additif (étape St7),
- ultérieurement, pendant l'extrusion, mesures continues ou répétées du temps de transit de couche (Delta_t) à l'aide du dispositif (26) de mesure radar ou d'un autre dispositif (34) de mesure radar et détermination de l'indice de réfraction (n14) actuel (étape St8), et
- réglage ou ajustement ultérieurs de la teneur en additif (K8) (étapes St5 à St8) par retour à la détermination de la teneur en additif (K8) du produit d'extrusion (12) (étape St5),

**caractérisé en ce que**
l'ajustement de la teneur en additif (K8) est effectué sous forme de commande en boucle fermée et qu'un ajustement de l'épaisseur de couche (wd) est superposé en tant que commande de niveau supérieur.

2. Procédé selon la revendication 1, **caractérisé en ce qu'**une matière plastique, par exemple du polyéthylène, du polypropylène ou du PVC, ou un caoutchouc, par exemple sous forme de pellets, de granulés, de poudre ou de flocons, est alimenté en tant que premier matériau en vrac, et que du noir de carbone, du sulfate de baryum ou du carbonate de calcium, en particulier sous forme de granulés, de poudre ou de pellets, est alimenté en tant que matériau additif en vrac.

3. Procédé selon l'une des revendications précédentes, **caractérisé en ce que**, lors de la mesure initiale du produit d'extrusion (12) (étape St4), l'épaisseur de couche (wd) et l'indice de réfraction (n14) initial sont déterminés à l'aide de deux mesures :

- une mesure du temps de transit radar en tant que mesure d'étalonnage d'un dispositif (26) de mesure radar stationnaire avant l'extrusion avec un espace (32) de mesure vide, et une mesure du temps de transit radar ultérieure du produit d'extrusion (12) avec le dispositif (26) de mesure radar stationnaire inchangé et/ou
- une mesure du temps de transit radar, en particulier à l'aide du dispositif (26, 34) de mesure radar stationnaire ou portable, et une mesure mécanique de l'épaisseur de couche du produit d'extrusion (12).

4. Procédé selon l'une des revendications précédentes, **caractérisé en ce que** la mesure radar est effectuée à l'aide d'un dispositif (26) de mesure radar stationnaire et/ou d'un dispositif (34) de mesure radar portable, et **en ce que** le rayonnement radar ou le rayonnement THz dans la gamme de fréquences suivante est utilisé :

10 GHz à 50 THz, en particulier de 30 ou 50 GHz à 10 ou 30 THz,
de préférence sous forme de modulation de fréquence, en particulier de rayonnement radar continu modulé en fréquence (FMCR), et/ou sous forme de mesure directe du temps de transit et/ou sous forme de rayonnement pulsé.

**5.** Procédé selon l'une des revendications précédentes, **caractérisé en ce qu'**un profilé (12), en particulier un tube (12) ou un profilé rectangulaire, est extrudé en tant que produit d'extrusion, puis est coupé à la longueur, l'épaisseur de couche étant déterminée comme étant une épaisseur de paroi (wd) d'une zone de paroi (30) du profilé (12).

**6.** Procédé selon l'une des revendications précédentes, **caractérisé en ce que** les valeurs (m) de mesure de référence comprennent des mesures de l'indice de réfraction (n14) en fonction des teneurs en additifs (K8), et une teneur en additif (K8) actuelle est déterminée à partir des valeurs (m) de mesure de référence, par exemple par interpolation, en particulier en tant que dépendance linéaire affine de l'indice de réfraction (n14) par rapport à la teneur en additif (K8).

**7.** Procédé selon l'une des revendications précédentes, **caractérisé en ce que** le dispositif d'alimentation (4) pour le premier matériau en vrac (5) et/ou le dispositif de dosage pour l'additif (8) est un dispositif de mesure gravimétrique pour mesurer un débit massique par unité de temps.

**8.** Procédé selon l'une des revendications précédentes, **caractérisé en ce qu'**une commande automatisée ou manuelle du dispositif de dosage (6) est prévue. (Étape St7).

**9.** Procédé selon l'une des revendications précédentes, **caractérisé en ce que**, lors de la mesure et de l'ajustement de l'alimentation en additif (K8), un retard temporel dû au temps de parcours du matériau entre le dispositif de dosage (4) pour l'additif en vrac (8) et le point de mesure du dispositif (26) de mesure radar stationnaire est pris en compte.

**10.** Procédé selon l'une des revendications précédentes, **caractérisé en ce que**

dans la commande de niveau supérieur de l'épaisseur de couche (wd), un réglage d'un extracteur (18) et/ou de l'extrudeuse (2) et/ou du dispositif d'alimentation (4) pour le premier produit en vrac (5) est effectué, et dans la commande en boucle fermée, ces valeurs restent inchangées et seul le dispositif de dosage (4) pour le matériau en vrac additif (8) est commandé.

**11.** Procédé selon la revendication 10, **caractérisé en ce que**
dans l'ajustement superposé de l'épaisseur de couche (wd), une mesure mécanique des épaisseurs de couche (wd) est effectuée à des intervalles de temps supérieurs aux intervalles de temps des mesures actuelles du temps de transit de couche (Delta_t) à l'aide du dispositif (26) de mesure radar stationnaire.

**12.** Ligne d'extrusion (1) pour l'extrusion d'un produit d'extrusion (12), la ligne d'extrusion (1) comprenant :

- une extrudeuse (2) conçue pour recevoir en continu un matériau en vrac (5, 8) et extruder un produit d'extrusion (12),
- une unité de commande (10) pour commander l'extrudeuse (2),
- un dispositif d'alimentation (4) conçu pour recevoir un premier matériau en vrac (5) et le transférer à l'extrudeuse (2), et pour fournir un premier débit d'alimentation (fR5) à un dispositif de commande (10),
- un dispositif de dosage (6) conçu pour recevoir un matériau additif (8) en vrac et le transférer à l'extrudeuse (2), et pour fournir un signal de mesure d'additif au dispositif de commande (10),
- un dispositif de refroidissement (15) en aval de l'extrudeuse (2) pour refroidir le produit d'extrusion (12), et
- un dispositif (26) de mesure radar stationnaire en aval du dispositif de refroidissement (15), conçu pour mesurer en continu le temps de transit de couche (Delta_t) à travers une couche (30) du produit d'extrusion (12), dans laquelle le dispositif de commande (10) est conçu
dans une mesure initiale du produit d'extrusion (12), pour déterminer l'épaisseur de couche (wd) et l'indice de réfraction (n14) du produit d'extrusion (12) (étape St4) et pour calculer (étape St5) et ajuster une teneur en additif (K8) du produit d'extrusion (12) à partir de l'indice de réfraction (n14) et des valeurs d'étalonnage (m) enregistrées,
dans laquelle le dispositif de commande (10) est en outre conçu pour commander en continu ou de manière répétée les mesures du dispositif (26) de mesure radar stationnaire pendant l'extrusion et pour enregistrer les valeurs de mesure du temps de transit de couche (Delta_t) actuel, pour déduire une modification de la teneur en additif (K8) à partir d'une modification du temps de transit de couche (Delta_t) actuel mesuré et pour ajuster la teneur en additif (K8) en commandant le dispositif de dosage (6) et en modifiant le débit d'alimentation en additif (étape St7).

**caractérisée en ce que**

le dispositif de commande (10) est en outre conçu pour effectuer l'ajustement de la teneur en additif (K8) en tant que commande en boucle fermée et pour effectuer un ajustement superposé de l'épaisseur de couche (wd) en commandant un ou plusieurs des dispositifs suivants :

- un extracteur (18) en aval du dispositif de refroidissement (15)
- le dispositif d'alimentation (4) pour le premier matériau en vrac (5)
- l'extrudeuse (2).

13. Ligne d'extrusion (1) selon la revendication 12, **caractérisée en ce que** le dispositif d'alimentation (4) pour le premier matériau en vrac (5) et/ou le dispositif de dosage pour l'additif (8) est un dispositif de mesure gravimétrique pour mesurer un débit massique par unité de temps.

14. Ligne d'extrusion (1) selon la revendication 12 ou 13, **caractérisée en ce que** le dispositif de commande (10) est conçu pour réaliser un procédé selon l'une des revendications 1 à 11.

EP 4 275 865 B1

Fig. 1

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3156140 A1
- DE 102015110600 B3
- DE 102020116810 A1
- WO 2016087564 A1
- DE 202018006144 U1